# EUROPÄISCHE PATENTSCHRIFT

(11) **EP 1 526 932 B1**
(45) Veröffentlichungstag und Bekanntmachung des Hinweises auf die Patenterteilung: **31.05.2006**
(21) Anmeldenummer: 03794833.8
(22) Anmeldetag: 08.07.2003
(51) Int. Cl.: B21D 39/00

(54) **VERFAHREN SOWIE MATRIZE ZUR ANBRINGUNG EINES FUNKTIONSELEMENTS AN EIN BLECHTEIL**
METHOD AND DIE FOR FIXING A FUNCTIONAL ELEMENT TO A PART MADE OF SHEET METAL
PROCEDE ET MATRICE POUR FIXER UN ELEMENT FONCTIONNEL SUR UNE PIECE EN TOLE METALLIQUE

(30) Priorität: 09.09.2002 DE 10241701
(43) Veröffentlichungstag der Anmeldung: 04.05.2005
(73) Patentinhaber: Profil Verbindungstechnik GmbH & Co. KG, 61381 Friedrichsdorf (DE)
(72) Erfinder: HUMPERT, Richard, 61191 Rosbach v.d.H. (DE)
(74) Vertreter: Manitz, Finsterwald & Partner GbR
(86) Internationale Anmeldenummer: PCT/EP2003/007348
(87) Internationale Veröffentlichungsnummer: WO 2004/024364

(56) Entgegenhaltungen:
- EP-A- 0 993 902
- DE-A- 10 033 152
- DE-A- 19 949 161
- US-A- 5 339 509

## Beschreibung

Die vorliegende Erfindung betrifft ein Verfahren zur Anbringung eines Funktionselementes mit einem Kopfende und ggf. einem Schaftteil, insbesondere eines Befestigungselementes, an ein Blechteil ggf. in flüssigkeits- und/oder gasdichter Form, wobei das Funktionselement gegen das durch eine, einen Umformraum aufweisende Matrize abgestützte Blechteil gepresst und Blechmaterial mittels wenigstens eines beweglich gelagerten Formteils vorzugsweise mittels wenigstens zwei solcher Formteile der Matrize, wobei das bzw. jedes Formteil einen Wandbereich des Umformraums bildet und durch eine radial nach innen gerichtete Bewegung des bzw. jedes Formteils in eine Hinterschneidung des Funktionselementes gedrückt wird. Ferner betrifft die Erfindung eine Matrize, insbesondere zur Verwendung in einem solchen Verfahren zur Anbringung eines Funktionselementes mit einem Kopfende und ggf. einem Schaftteil, insbesondere eines Befestigungselementes, an ein Blechteil ggf. in flüssigkeits- und/oder gasdichter Form, wobei die Matrize einen Matrizenkörper und wenigstens ein darin beweglich gelagertes Formteil, vorzugsweise mindestens zwei solche Formteile sowie ein in Richtung auf das Blechteil zu vorgespanntes Anschlagelement für das bzw. jedes Formteil in der Mitte des Matrizenkörpers aufweist und das bzw. jedes Formteil einen Wandbereich eines Umformraums bildet, der in der Matrize im Bereich ihrer dem Blechteil zugewandten Stirnseite vorgesehenen ist und durch eine jeweilige schräg gestellte Führungsbahn für eine radial nach innen gerichtete Bewegung geführt ist, die zu einem Eindrücken des Blechmaterials in ein Formmerkmal bzw. eine Hinterschneidung des Funktionselementes führt.

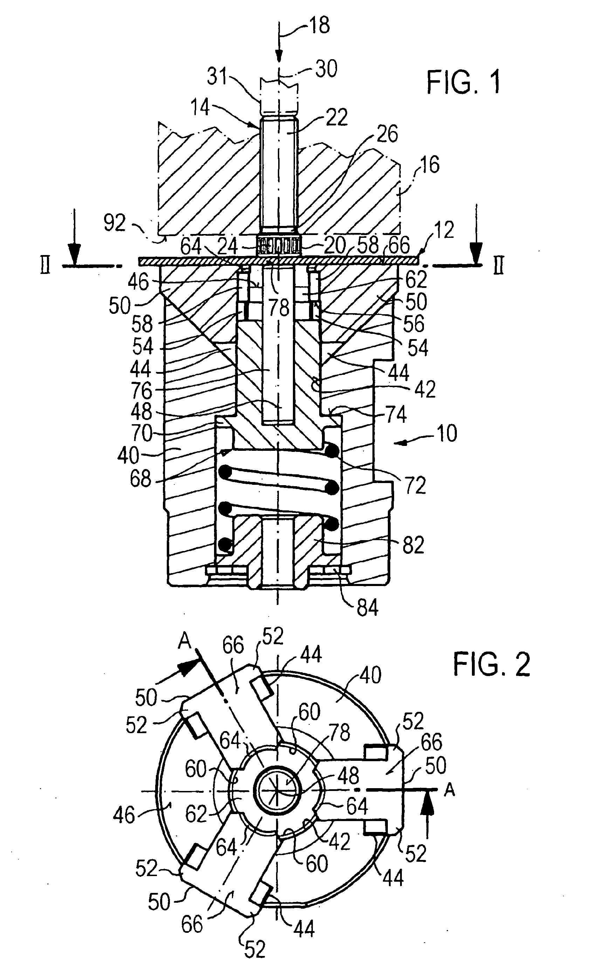

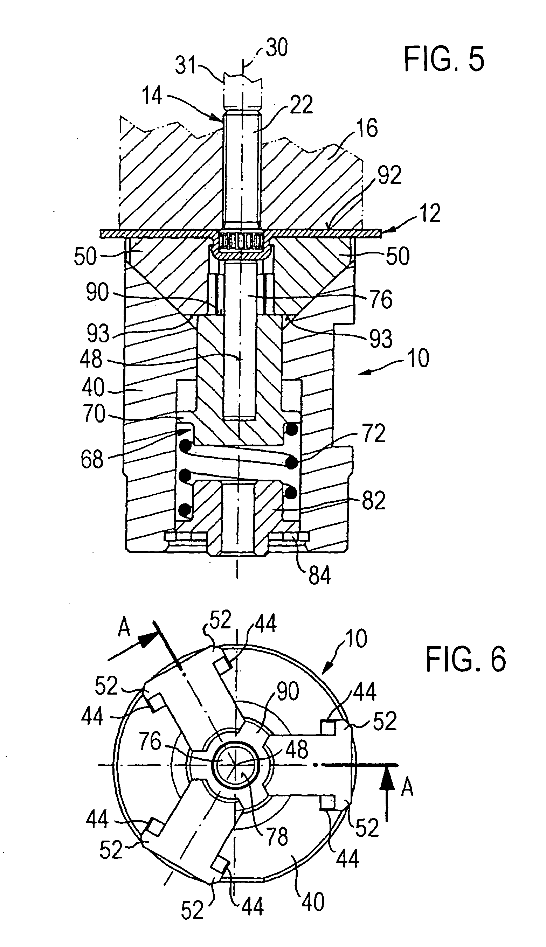

Ein Verfahren bzw. eine Matrize dieser Art ist aus der EP-A-0 993 902 bekannt. Dort wird ein solches Verfahren bzw. eine solche Matrize verwendet, um verschiedene Funktionselemente an ein Blechteil anzubringen. Beispielsweise kann es sich bei dem Funktionselement um ein Element gemäß den dortigen Fig. 1a und 1b handeln, wo der Kopfteil einen größeren Durchmesser als der Schaftteil aufweist und zwischen dem Kopfteil und Schaftteil eine Hinterschneidung gebildet ist. Ferner kann es sich bei dem Funktionselement um ein Element handeln, das sich entsprechend der dortigen Fig. 5 als Gewindestift mit einem zumindest im wesentlichen konstanten Durchmesser darstellt. Dabei können Verdrehsicherungsmerkmale im Bereich des Kopfendes des Gewindestiftes vorgesehen werden. Alternativ hierzu kann es sich bei dem Funktionselement um ein Element entsprechend der deutschen Patentanmeldung DE-A-101 189 73 handeln. Ferner kann es sich bei dem Funktionselement um ein Element handeln, das sich als hohles Rohrelement darstellt oder entsprechend der europäischen Patentanmeldung EP-A 124 93 05 ausgebildet ist. Ferner kann sich das Funktionselement lediglich als Mutterelement darstellen, wobei der Mutterkörper sozusagen den Kopfteil des Elements bildet.

Wichtig bei der Form des Funktionselements ist lediglich, dass es im Bereich des Kopfteils bzw. des Elementeteils, das vom Blechteil umfasst wird, eine oder mehrere Hinterschneidungen oder Formmerkmalen wie Vertiefungen gibt, die für einen formschlüssigen Eingriff mit dem Blechmaterial im Bereich einer sich bei der Anbringung des Funktionselements am Blechteil ausbildenden Vertiefung des Blechteils vorliegt. Es ist nicht notwendig, dass das Funktionselement mit einem Gewinde ausgestattet ist. Es kann sich bei dem Funktionselement durchaus um ein Element handeln, das beispielsweise als Führungsstift ausgebildet ist, oder einen Kugelkopf aufweist oder mit besonderen Merkmalen ausgestattet ist, um bestimmte Funktionen durchzuführen. Als weiteres Beispiel kann hier einen Stift genannt werden, der in einem Auto der Aufnahme einer Federklamrner zur Befestigung eines Teppiches oder einer Bremsleitungsklammer oder Kabelklammer dient.

Ferner kann es sich bei dem Funktionselement um ein Hohlkörperelement wie ein Mutterelement mit oder ohne Innengwinde handeln, das selbst den Kopfteil darstellt und nicht unbedingt einen Schaftteil aufweist. Die Hinterschneidung wäre dann bspw. am Übergang von der Seitenwand des Elements in dessen freiliegenden Stirnfläche zu realisieren, bzw. durch diesen Übergang realisiert.

Es ist bekannt, Funktionselemente durch verschiedene Verfahren und unter Anwendung von verschiedenen Matrizen an Blechteilen im industriellen Maßstab anzubringen. Dies geschieht häufig zeitgleich mit der Verformung des Blechteils zu einem dreidimensionalen Gegenstand. Problematisch bei allen solchen Verfahren und Matrizen ist, dass sie zuverlässig über lange Serien arbeiten müssen.

Ein Problem bei der Herstellung von Blechteilen, die eine Vertiefung aufweisen, in der das Kopfteil eines Funktionselementes formschlüssig aufgenommen ist, liegt darin, dass die bisher bekannten Verfahren bzw. Matrizen gelegentlich zu einer Fehlausbildung der Vertiefung führen, beispielsweise in dem Sinne, dass die Vertiefung nicht symmetrisch ausgebildet ist.

Aufgabe der vorliegenden Erfindung ist es, ein Verfahren bzw. eine Matrize der eingangs genannten Art so weiter zu verbessern, dass das Verfahren bzw. die Matrize noch zuverlässiger arbeiten und unerwünschte unsymmetrische oder Fehlausbildungen des Blechteils nicht oder höchstens nur extrem selten vorkommen.

Um diese Aufgabe zu lösen, wird ausgehend von einem Verfahren der eingangs genannten Art erfindungsgemäß vorgesehen, dass das bzw. jedes Formteil zunächst solange durch einen Mantelflächenbereich eines Anschlagelements radial abgestützt und hierdurch an der radial nach innen gerichteten Bewegung gehindert wird, bis das Blechmaterial durch das Kopfende des Funktionselements in den Umformraum zur Ausbildung einer deutlichen, das Kopfende mindestens weitgehend umschließenden Vertiefung gezogen ist und erst anschließend durch eine axiale Bewegung des Mantelflächenbereichs am Formteil bzw. an jedem Formteil vorbei für die radiale Bewegung zum Drücken des Blechmaterials in die Hinterschneidung freigegeben wird.

Ferner wird, ebenfalls erfindungsgemäß eine Matrize der eingangs genannten Art vorgesehen, dass sich dadurch auszeichnet, dass jedes Formteil bei der Ausbildung einer Vertiefung im Blechteil, welche im Umformraum der Matrize durch auf das Kopfende des Funktionselements ausgeübtem Druck erfolgt, an einem Mantelflächenbereich des Anschlagelements radial abgestützt ist und hierdurch an der radail nach innen gerichteten Bewegung solange gehindert ist, bis der Mantelflächenbereich des Anschlagelements, an dem jedes Formteil abgestützt ist, durch den erwähnten Druck vom Kopfende des Funktionselements gegen die Vorspannung am Formteil vorbei bewegt ist und die radiale Bewegung des Formteils freigegeben hat.

Dadurch, dass das Formteil bzw. die Formteile zunächst durch Anlage am Anschlagelement unbeweglich gehalten werden, liegen klar definierte Verhältnisse für die Ausbildung der Vertiefung vor , so dass es gelingt, die Vertiefung ordnungsgemäß auszubilden, ohne Fehlausbildungen der Vertiefung befürchten zu müssen. Ferner werden die radialen Bewegungen der Formteile, die dazu führen, dass das Blechmaterial in die Formmerkmale bzw. die Hinterschneidung des Funktionselements hineingedrückt wird, durch das gewählte Verfahren bzw. durch die erfindungsgemäß ausgebildete Matrize so synchronisiert, dass eine symmetrische Verformung des Blechmaterials im Bereich der Vertiefung um das Kopfende des Funktionselementes herum erfolgt, wodurch ebenfalls eine symmetrische Ausbildung der Verbindung zwischen dem Blechteil und dem Funktionselement erfolgt, ohne dass Fehlausbildungen dieser Verbindung zu befürchten sind.

Je nachdem, wie das Funktionselement geschaffen ist, können die Formteile entsprechend dem Anspruch 2 an ihren, dem Blechmaterial zugewandten Flächen am Übergang in den den Umformraum bildenden Wandabschnitten gerundet sein, und die genannten Wandabschnitte können das Blechmaterial in Formmerkmale in der radial äußeren Seite des Kopfendes des Funktionselements hineindrücken. Sollte eine Hinterschneidung am Funktionselement am Kopfteil oder zwischen dem Kopfteil und dem Schaftteil vorliegen, so können die Formteile an ihren, dem Blechmaterial zugewandten Flächen am Übergang in den den Umformraum bildenden Wandabschnitten gerundete, radial nach innen ragende Vorsprünge aufweisen, die das Blechmaterial in die Hinterschneidung hineindrücken. Auch hier dient die gerundete Form der schöneren Behandlung des Blechteils, so dass dieses nicht perforiert oder gelocht wird.

Besonders einfach gestaltet sich das erfindungsgemäße Verfahren bzw. die erfindungsgemäße Matrize, wenn das Anschlagelement durch das Kopfende des Funktionselements unter Zwischenschaltung des Blechmaterials bei der Ausbildung der Vertiefung zurückgedrängt wird, bis die Abstützung der Formteile am Anschlagelement aufgehoben ist.

Mit einer relativ einfachen Ausbildung des Anschlagelements wird somit bei der Ausbildung der Vertiefung im Blechteil das Anschlagelement der Matrize soweit zurückgedrängt, bis die Formteile sich nicht mehr am Anschlagelement abstützen und aufgrund des auf den dem Blechteil zugewandten Stirnflächen der Formteile ausgeübten Druckes sich entlang der schräg gestellten Führungsbahnen bewegen können. Auch diese Bewegung erfolgt synchronisiert, weil das Blechteil durch den Stempel des Setzkopfes auf den Stirnseiten aller Formteile gleichzeitig gedrückt wird und selbst für die synchronisierte Bewegung der Formteile entlang der jeweils zugeordneten schräg gestellten Führungen sorgt. Da die Formteile unter der Einwirkung des Setzkopfs, der gegen das Blechteil drückt, in axialer Richtung um den gleichen Betrag bewegt werden, bewegen sie sich ebenfalls alle - weil die Führungsbahnen alle den gleichen Winkel mit der Längsachse der Matrize bilden - um einen gleichen radialen Betrag in die radiale Richtung. Im Bereich der Formteile der Matrize wird das Blechmaterial besonders innig mit am Funktionselement ausgebildeten, insbesondere nut- und/oder riffelartigen Verdrehsicherungsmerkmalen in Eingriff gebracht, wodurch eine besonders sichere Verdrehsicherung erfolgt.

Besonders günstig ist es, wenn für die Formteile jeweilige zur Längsachse der Matrize geneigte T-nutartige Führungsbahnen vorgesehen sind, in denen die Formteile nach der Freigabe der radial nach innen gerichteten Bewegung unter dem Druck eines Stempels gleiten und die oben erwähnte axiale und radiale Bewegung gleichzeitig ausführen. Die Formteile können im Querschnitt auch die Form von T-Nutsteinen aufweisen, wodurch eine besonders günstige Führung der Formteile erfolgt.

Besonders günstig ist es, wenn der Umformraum der Matrize nicht nur durch die Wandbereiche der beweglich gelagerten Formteile gebildet ist, sondern auch durch fest angeordnete Wandbereiche des Matrizenkörpers gebildet ist, die je zwischen zwei beweglichen Formteilen der Matrize angeordnet sind.

Die fest angeordneten Wandbereiche des Matrizenkörpers sind bevorzugt im Ausgangszustand zur Erzeugung der Vertiefung im Blechteil so ausgelegt, dass sie gegenüber den Wandbereichen der Formteile, die den Umformraum mit definieren, fluchten oder geringfügig zurückversetzt sind, während sie im geschlossenen Zustand der Matrize nach der Fertigstellung der Verbindung zwischen dem Funktionselement und dem Blechteil deutlich gegenüber den Wandbereichen der Formteile, die den Umformraum mit definieren, so versetzt sind.

Dies bedeutet, dass bei der Schließbewegung der Matrize das Blechmaterial im Bereich der Vertiefung besonders intensiv im Bereich der Formteile verformt wird, dagegen in Bereichen zwischen den Formteilen eher weniger verformt wird. Diese abwechselnde Verformung des Blechmaterials im Bereich der Vertiefung führt zu einer außerordentlich günstigen Verdrehsicherung.

Das Verfahren wird üblicherweise so durchgeführt, dass das Blechteil nicht perforiert wird, wodurch eine gas- und flüssigkeitsdichte Verbindung zwischen dem Funktionselement und dem Blechteil möglich ist. Dies kann insbesondere dann von Vorteil sein, wenn die Funktionselemente in einer Bodengruppe eines Fahrzeugs oder in Bereichen eingebaut werden, wo Wasser oder Salzlösung von außen in Berührung mit dem Blechteil kommt. Aufgrund der nicht erfolgten Perforierung des Blechteils besteht keine Möglichkeit, dass eine solche Flüssigkeit von der äußeren Seite des Blechteils auf die innere Seite des Blechteils durch die Verbindung zwischen dem Funktionselement und dem Blechteil gelangt und dort Korrosion verursacht.

Die Erfindung ist aber nicht darauf beschränkt, Verbindungen herzustellen, bei denen das Funktionselement das Blechteil nicht durchdringt. Stattdessen ist es durchaus möglich, mit einem gelochten Blech zu arbeiten und die Vertiefung im Bereich der Lochung des gelochten Bleches auszubilden oder bei der Ausbildung einer zunächst ungelochten Vertiefung im Blechteil dieses mit einem nachlaufenden Lochstempel durchzulochen. Eine solche Konstruktion könnte beispielsweise dann von Vorteil sein, wenn es sich bei dem Funktionselement um ein Mutterelement handelt, wo man Zugang zum Gewinde von der in dem Funktionselement abgewandten Seite des Blechteils wünscht oder eine Situation herbeiführen möchte, in der eine Schraube durch ein Mutterelement und durch das Blechteil hindurchgeschraubt werden kann, was beispielsweise dann nützlich sein könnte, wenn mit einer gewindeformenden oder gewindeschneidenden Schraube gearbeitet wird, die gleichzeitig ein Gewinde im Blechteil erzeugt und hierdurch einen leitenden Übergang zwischen Schraube und Blechteil schafft, beispielsweise dann, wenn es sich bei der Schraube um einen Massebolzen oder andere elektrische Anschlüsse handelt.

Besonders bevorzugte Ausführungen des Verfahrens bzw. der Matrize sind den Unteransprüchen zu entnehmen.

Die Erfindung wird nachfolgend näher und anhand eines bevorzugten Ausführungsbeispiels unter Bezugnahme auf die Zeichnungen erläutert; in diesen zeigen:
- Fig. 1: einen Längsschnitt durch eine erfindungsgemäße Matrize, die zur Anwendung mit einem Setzkopf zur Anbringung eines Funktionselementes an einem Blechteil gedacht ist, wobei die Schnittebene der Fig. 1 mit A-A in Fig. 2 angegeben ist,
- Fig. 2: eine Draufsicht auf die Matrize der Fig. 1, entsprechend der Ebene II-II in Fig. 1,
- Fig. 3 und 4: Darstellungen, die den Fig. 1 und 2 entsprechen, jedoch nach einer Schließbewegung einer Presse, in die der Setzkopf und die Matrize eingebaut ssind, wobei eine Vertiefung im Blechteil ausgebildet ist und die Ausbildung der Vertiefung kurz vor dem Abschluss steht, und
- Fig. 5 und 6: weitere Darstellungen entsprechend der Fig. 1 und 2 bzw. 3 und 4, jedoch am Ende des Anbringungsverfahrens zu einem Zeitpunkt,wo das Funktionselement vollständig am Blechteil angebracht ist.

Bezugnehmend zunächst auf die Fig. 1 und 2 ist dort eine Matrize 10 gezeigt, die unterhalb eines Blechteils 12 angeordnet ist, wobei oberhalb des Blechteils ein Funktionselement 14 von einem schematisch dargestellten Setzkopf auf das Blechteil in Pfeilrichtung 18 zu bewegt wird, wobei das untere Stirnende des aus Kopfteil 20 und Schaftteil 22 bestehenden Funktionselement gerade auf das Blechteil 12 gelangt ist.

Wie aus Fig. 1 ersichtlich, ist der Kopfteil 20 des Funktionselementes 14 im Durchmesser größer als der Durchmesser des Schaftteils 22, der in diesem Beispiel mit einem Gewinde versehen ist. Ferner weist der Kopfteil 20 des Funktionselementes mehrere radiale Vertiefungen 24 auf, die gleichmäßig um den Umfang des Kopfteils 20 angeordnet sind. In diesem Beispiel sind zwölf solche gleichmäßig verteilte Vertiefungen vorgesehen, die jeweils in Draufsicht die Form eines Rechtecks mit gerundeten Ecken aufweisen. Ferner sieht man aus Fig. 1, dass der Kopfteil 20 des Funktionselements 14 über eine radiale Schulter 26 in den hier mit Gewinde versehenen Schaftteil 22 übergeht. Es soll an dieser Stelle betont werden, dass dies lediglich eine mögliche Ausbildung des Funktionselements 14 darstellt. Das Funktionselement kann die verschiedensten Ausbildungen aufweisen, wie oben näher erläutert wurde.

Bei dem Setzkopf 16 kann es sich um einen beliebigen Setzkopf handeln. Der Setzkopf muss lediglich imstande sein, das Funktionselement 14 aufzunehmen und dieses in Richtung auf die Matrize 10 zu zu drücken. Bei der Darstellung der Fig. 1 drückt der Setzkopf 16 sowohl auf die radiale Schulter 26 des Funktionselements als auch auf das freie Stirnende des Schaftteils 22, wobei hier ein gefederter Stift 31 zur Anwendung gelangen kann. Dieser gefederte Stift 31 kann auch zurückgezogen werden, um die automatische Zufuhr von weiteren vereinzelten Funktionselementen zuzulassen. Der Setzkopf EP-A 0 755 749 kann beispielsweise nach der europäischen Patentanmeldung oder nach der europäischen Patentanmeldung EP-A 124 9305 ausgebildet sein.

Ferner kann ein ringförmiger, gefederter Niederhalter vorgesehen sein, der in Fig. 1 nicht gezeigt ist, der aber ringförmig um die mittlere Längsachse 30 des Setzkopf 16, die zugleich die mittlere Längsachse des Funktionselements 22 und der Matrize 10 darstellt, anzuordnen wäre und die Aufgabe hätte, das Blechteil an die obere Stirnseite der Matrize 10 anzudrücken.

Die Ausbildung der Matrize 10 ist wie folgt zu verstehen: Das Bezugszeichen 40 deutet auf einen Matrizenkörper, der mit einer mittleren, konzentrisch zur Längsachse 30 angeordneten, gestuften Bohrung 42 ausgebildet ist. Ferner sind in diesem Beispiel drei schräggestellte T-nutförmige Führungsbahnen 44 in den Matrizenkörper eingefräst bzw. erodiert, wobei jede schräggestellte Führungsbahn 44 von der oberen Stirnseite 4.6 des Matrizenkörpers 40 kommend, auf einen gemeinsamen Mittelpunkt 48 an der mittleren Längsachse 30 ausgerichtet ist. Die drei in Fig. 2 gezeigten Führungsbahnen 44 sind in gleichmäßigen Abständen um die mittlere Längsachse 30 angeordnet und weisen jeweils die gleiche Neigung zur mittleren Längsachse 30 auf. In den T-nutartigen Führungsbahnen verschiebbar gelagert, befinden sich in diesem Beispiel drei bewegliche Formteile der Matrize 10, die in Seitenansicht eine etwa dreieckige Form aufweisen und senkrecht zur jeweiligen Führungsbahn jeweils den Querschnitt eines T-Nutensteins haben.

Die Formteile 50 haben demnach zwei Schulterbereiche 52, die in die T-nutförmige Führungsbahn 44 gleiten, wodurch die Bewegungsfreiheit der Formteile 50 auf eine Bewegung in Längsrichtung der Führungsbahnen beschränkt ist, d.h. in Schrägrichtung auf den Mittelpunkt 48 zu. Auf ihrer radial inneren Seite weist jedes Formteil 50 eine teilzylindrische Fläche 54 auf, die über eine kleine radiale Schulter 56 in einen ebenfalls teilzylindrischen Wandabschnitt 58 übergeht. Diese Wandabschnitte 58 der Formteile 50 bilden zusammen mit fest angeordneten zylindrischen Wandabschnitten 60 des Matrizenkörpers 40 einen Umformraum 62. Dabei erstrecken sich die feststehenden Wandabschnitte 60 des Matrizenkörpers 40 entlang eines Kreiszylinders, der konzentrisch zur mittleren Längsachse 30 angeordnet ist.

Wie ebenfalls aus Fig. 1 und 2 ersichtlich, weisen die Formteile 50 im Bereich ihrer oberen Stirnseiten 66 jeweilige radial nach innen gerichtete gerundete Vorsprünge 64 auf, die - wie später näher erläutert wird - dazu dienen, das Blechmaterial in die Vertiefungen bzw. Hinterschneidungen 24 des Funktionselementes 22 hineinzudrücken. Es soll an dieser Stelle zum Ausdruck gebracht werden, dass die radial nach innen gerichteten Vorsprünge 64 nicht zwangsläufig erforderlich sind. Stattdessen könnten die zylindrischen Wandabschnitte 58 über einen Radius oder sanfte Rundungen in die Stirnfläche des jeweiligen Formteils 50 übergehen, d.h. ohne einen solchen radialen, nach innen gerichteten Vorsprung 64. Eine solche Ausbildung wäre dann von Vorteil, wenn das Funktionselement 22 einen zumindest im Wesentlichen konstanten Durchmesser aufweist und beispielsweise durch einen Gewindestift realisiert wäre, wobei die Formteile 50 dann die Aufgabe hätten, das Blechmaterial stellenweise um den Umfang des Gewindestiftes oder um den gesamten Umfang des Gewindestiftes in das Gewinde bzw. in eine Riffelung hineinzupressen, die auf das Gewinde aufgeprägt wurde oder dieses ersetzt.

Ebenfalls aus Fig. 1 ersichtlich ist ein beweglich gelagertes Anschlagelement 68, das einen Flansch 70 aufweist, an dessen Unterseite eine Schraubendruckfeder 72 angreift, um das Anschlagelement 68 nach oben vorzuspannen. Dabei gelangt die Oberseite des Ringflansches 70 in Anlage an eine Ringschulter 74 der Stufenbohrung 42 des Matrizenkörpers 40, und dies begrenzt die mögliche, nach oben gerichtete Bewegung des Anschlagelements 68. Das Anschlagelement 68 weist ferner einen mittig angeordneten Stift 76 auf, dessen obere Stirnseite 78 in der Ebene der Stirnseiten 66 der Formteile 50 liegt, wobei diese Ebene senkrecht zur Längsachse 30 steht. Man merkt ferner aus Fig. 1, dass die obere Stirnseite 46 des Matrizenkörpers 42 von den Stirnseiten 66 der Formteile 50 zurückversetzt ist.

Die Schraubendruckfeder 72 wird an ihrer dem Anschlagelement 68 abgewandten Ende an ein Widerlager 82 abgestützt, das mittels eines Federringes 84 im Matrizenkörper 40 gehalten ist.

Die Fig. 1 und 2 zeigen die Ausgangslage der Matrize 10 und des Setzkopfes 16 unmittelbar vor Beginn der Anbringung des Funktionselementes 22 an das Blechteil. Dabei ist die Matrize 10 üblicherweise in einem unteren Werkzeug einer Presse angeordnet, während der Setzkopf 16 von einem oberen Werkzeug der Presse oder von einer Zwischenplatte der Presse getragen wird. Auch andere Anordnungen sind möglich. Beispielsweise kann die Matrize an der Zwischenplatte der Presse oder von einer Zwischenplatte der Presse getragen werden. Auch andere Anordnungen sind möglich. Beispielsweise kann die Matrize an der Zwischenplatte der Presse und der Setzkopf am oberen Werkzeug der Presse angebracht werden. Auch sind umgekehrte Anordnungen denkbar, bei denen die Matrize im oberen Werkzeug der Presse und der Setzkopf im unteren Werkzeug der Presse oder an der Zwischenplatte angebracht werden. Das Vorsehen einer Presse zur Betätigung der durch den Setzkopf und die Matrize dargestellten Werkzeuge ist jedoch nicht zwingend. So sind beispielsweise Anordnungen möglich, bei denen die Matrize und der Setzkopf von einem Roboter getragen werden, um die erforderliche Relativbewegung zwischen dem Setzkopf und der Matrize in Richtung der Längsachse des Funktionselementes zu realisieren, wobei diese Relativbewegung entweder durch den Roboter selbst oder durch Krafteinwirkung von außen erfolgen kann. Auch andere Werkzeuge sind denkbar, die für die erforderliche Relativbewegung des Setzkopfes und der Matrize sorgen können.

Die Bezeichnungen oben, unten usw., die in der Beschreibung verwendet werden, gehen von der geometrischen Anordnung der Fig. 1 und 2 aus und sind aber nicht als einschränkend zu betrachten. Bei einer anderen geometrischen Anordnung, beispielsweise mit der Matrize oben und dem Setzkopf unten, sind die verwendeten Bezeichnungen der Positionen entsprechend umzudeuten. Schließlich sind auch schräge Anordnungen der Matrizen um den Setzkopf durchaus denkbar.

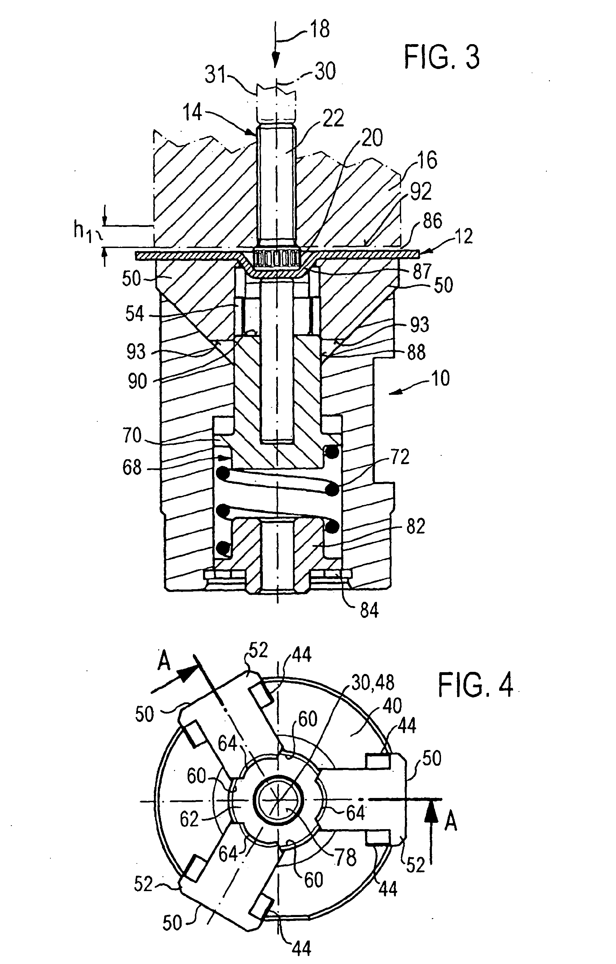

Das Anbringen des Funktionselementes 14 an das Blechteil 12 wird nunmehr anhand der weiteren Fig. 3 bis 6 näher beschrieben.

Die Fig. 3 zeigt den Zustand nachdem die Presse teilweise geschlossen ist, d.h. der Setzkopf 16 ist im Vergleich zu Fig. 1 bereits um den Betrag h₁ in Pfeilrichtung 18 in Richtung auf die Matrize 10 zu bewegt worden. Die Presse ist noch nicht vollständig geschlossen, was aus dem Abstand 86 zwischen der Unterseite des Setzkopfes 16 und dem Blechteil 12 ersichtlich ist. Bei dieser Schließbewegung der Presse hat der Setzkopf einen Druck auf das Funktionselement 22 ausgeübt, so dass der Kopfteil 20 des Funktionselementes in das Blechteil 12 eine Vertiefung 87 erzeugt hat, die sich innerhalb des Umformraumes 62 befindet.

Während dieser Bewegung des Setzkopfes sind die Formteile 50 unbeweglich gehalten, da sie an einer Bewegung entlang der Führungsbahn 22 durch die Anlage der zylindrischen Flächen 54 an der äußeren zylindrischen Fläche 88 des Anschlagelements 68 gehindert werden. Man merkt aus Fig. 3, dass diese Anlage der teilzylindrischen Flächen 54 an der zylindrischen Fläche 88 im Begriff ist, aufgehoben zu werden, da das Anschlagelement 68 aufgrund des mittels des Funktionselements 22 über das Blechteil 12 auf den mittleren Stift 76 ausgeübten Druckes so weit zurück verdrängt ist, dass die Ringfläche 90 des Anschlagelements, die den mittleren Stift 76 umgibt und die obere Stirnseite des zylindrischen Teils 88 des Anschlagelements darstellt, bald unterhalb der unteren Stirnseiten 92 der Formteile 50 zu liegen kommen wird.

Wenn davon ausgegangen wird, dass eine weitere Schließbewegung der Presse dazu führt, dass der Setzkopf 16 mit seiner Unterseite 92 an das Blechteil 12 drückt, wobei die Ringfläche 90 des Anschlagelements 68 jetzt unterhalb der unteren Seiten 93 der Formteile liegt, so können sich die Formteile 50 nunmehr aus der Position gemäß Fig. 3 in die radial nach innen verschobenen Positionen gemäß Fig. 5 bewegen. Sie sind dazu gezwungen, weil die in Pfeilrichtung 18 wirkende Kraft des Setzkopfes auf dem Blechteil und daher auf die oberen Stirnseiten 66 der Formteile 50 lastet.

Diese Kraft zwingt die Formteile 50 sich entlang der schräggestellten Führungsbahnen zu bewegen, wobei sie an dieser Bewegung durch das Anschlagelement 68 nicht mehr gehindert sind, da die Ringfläche 92 unterhalb der Stirnseiten der Formteile 50 liegt. Die Bewegung setzt sich fort, bis die Position gemäß Fig. 5 erreicht ist. Man sieht hier, dass die Vertiefung durch die radial nach innen gerichtete Bewegung der Formteile, die mit der Bewegung entlang der schräggestellten Führung 44 einhergeht, die gemäß Fig. 3 ausgebildete Vertiefung nunmehr an drei Stellen fest an das Kopfteil 20 des Funktionselementes 22 gedrückt hat, wobei die radial nach innen vorspringenden Nasen 64 der Formteile 50 das Blechmaterial in die gegenüberliegenden Formmerkmale bzw. Hinterschneidungen des Kopfteils des Funktionselementes 14 hineingedrückt hat, so dass eine feste Anlage des Blechteils am Kopfteil 20 des Funktionselementes 22 vorliegt. Durch das Eingreifen des Blechmaterials in die Vertiefungen 24 wird eine hohe Verdrehsicherung sowie ein hoher Ausziehwiderstand erzeugt. Die Verbindung zwischen dem Funktionselement 14 und dem Blechteil 12 ist nun fertig und das Zusammenbauteil bestehend aus den Blechteilen und dem daran angebrachten Funktionselement kann nunmehr durch Öffnen der Presse aus dieser herausgenommen werden. Dabei sorgt bei Öffnung der Presse die von der Feder 72 auf das Anschlagelement ausgeübte, nach oben gerichtete Kraft, die über den mittleren Stift 76 auf das Zusammenbauteil bestehend aus dem Funktionselement 14 und dem Blechteil 12 wirkt, dass das Zusammenbauteil nach oben verschoben wird, wodurch die Formteile 50 mit angehoben werden, insbesondere deshalb, weil die radial nach innen gerichteten Vorsprünge in das Blechmaterial hineingreifen. Diese Anhebbewegung erfolgt solange, bis der zylindrische Teil des Anschlagelements wieder zwischen die Formteile im Bereich der zylindrischen Flächen 54 hineingleiten kann. Zu diesem Zeitpunkt ist die Matrize wieder geöffnet und die Formteile sind so weit radial nach außen und oben bewegbar, dass das Zusammenbauteil entfernt werden kann und ein neues Blechteil in die Presse eingeführt werden kann, um mit einem neuen Funktionselement verbunden zu werden.

Die Anhebung des Zusammenbauteils 12, 14 aus der Matrize 10 kann außerdem mindestens teilweise vom Setzkopf aus erfolgen, wenn dieser Kräfte auf den Schafteil 22 ausübt wie bspw. bei dem Setzkopf nach der EP-Anmeldung EP-A1249305. Aufgrund des Formschlusses zwischen dem Kopfteil 20 und dem Blechteil 12 heben diese Kräfte die Formteile 50 an und zwingen diese zu einer radial nach außen gerichteten Bewegung, die aufgrund der schräg gestellten Führungsbahnen erfolgt, bis das Zusammenbauteil von den Formteilen freigegeben wird. Der Setzkopf muss aber dann so ausgelegt und angesteuert werden, dass er anschließend den Schafteil und daher das Zusammenbauteil freigibt.

Dadurch, dass die stationären Wandabschnitte 60 des Matrizenkörpers 40 kreiszylindrisch ausgebildet sind, ist in diesen Bereichen keine Verformung des Blechteils möglich, die die Entnahme des Zusammenbauteils aus der Presse verhindern würde. Man merkt außerdem aus den Fig. 5 und 6, dass die Schließbewegung der Presse automatisch beendet wird, wenn der Setzkopf 16 das Blechteil 12 auf die oberen Stirnseiten 66 der Formteile 50 und auf die obere Stirnseite 46 des Matrizenkörpers gedrückt hat. In diesem Zustand ist die Presse blockiert und wird nicht weiter schließen können bzw. diese Blockade wird über die Pressensteuerung erkannt und führt zu einer Öffnung der Presse. Diese feste Anlage beschränkt auch die maximale radial nach innen gerichtete Bewegung der Formteile und stellt sicher, dass die Verpressung des Blechteils in radialer Richtung an das Funktionselement um den erwünschten Betrag erfolgt. Die Verzögerung der Bewegung der Formteile 50, bis sich die Vertiefung im Bleichteil ausgebildet hat, sorgt für eine symmetrische Ausbildung des Blechteils und die synchronisierte Bewegung der Formteile, die aufgrund der mechanischen Auslegung dann eintritt, wenn das Anschlagelement 68 so weit zurück gedrängt ist, dass die Formteile axial und radial bewegt werden können, sorgt ebenfalls für eine saubere symmetrische Verformung des Blechteils 12.

Es soll an dieser Stelle zum Ausdruck gebracht werden, dass, obwohl die bevorzugte Anordnung drei bewegliche Formteile 50 vorsieht, es auch denkbar wäre, mit zwei Formteilen oder gar nur mit einem beweglichen Formteil zu arbeiten, wobei auch eine andere Anzahl von Formteilen bei Bedarf gewählt werden kann, beispielsweise vier, fünf, sechs oder mehr. Es wäre auch denkbar, auf die stationären Wandabschnitte zur Begrenzung von Teilsegmenten des Umformraumes zu verzichten und das Blechmaterial um den gesamten Umfang der Vertiefung von in Radialrichtung beweglichen Formteilen zusammendrücken zu lassen. Es ist aber gerade als vorteilhaft angesehen, dass das Blechmaterial im Bereich der Vertiefung stellenweise fest an das Funktionselement 14 angedrückt wird, da dies so weit gehen kann, dass das Funktionselement 14 im Bereich der lokal verformten Blechteile in diesen Bereichen mit verformt wird, jedoch in den Bereichen, die von den stationären Wandbereichen des Matrizenkörpers vorgegeben sind, nicht verformt wird, was ebenfalls zu einer Verdrehsicherung führt, und zwar auch dann, wenn keine Verdrehsicherungsmerkmale am Kopfteil vorgesehen sind. Mit anderen Worten können die beweglichen Formteile dann zu einer lokalen Eindellung des Kopfteils des Funktionselements führen, wobei das Blechmaterial in die lokale Eindellung hinein verformt wird und für die erforderliche Verdrehsicherung sorgt. Die ineinander greifenden Bereiche des Funktionselements 14 und des Blechteils 12 sorgen auch in diesem Beispiel für den erforderlichen Ausziehwiderstand des Funktionselementes.

Darüber hinaus kann die Anordnung so getroffen werden, dass eine Hinterschneidung zwischen dem Kopfteil und dem Schaftteil des Funktionselements vorliegt, beispielsweise im Bereich der Ringschulter 26, wobei das Blechmaterial in diese Hinterschneidung hineingedrückt werden kann und hierdurch ein hoher Ausziehwiderstand erreicht wird.

Man merkt schließlich aus einem Vergleich der Fig. 6 mit den Fig. 2 und 4, dass die radial nach innen gerichtete Bewegung der Formteile 50 in der Fig. 6 dazu geführt hat, dass die stationären Wandabschnitte 60 gegenüber den teilzylindrischen Flächen 58 um einen ausgeprägten Betrag zurückversetzt sind, während dies bei den Fig. 2 und 4 nicht der Fall ist, weil dort die zylindrischen Flächen 58 der Formteile 50 eher mit den teilzylindrischen Flächen 60 des Matrizenkörpers 40 fluchten.

## Patentansprüche

1. Verfahren zur Anbringung eines Funktionselementes (14) mit einem Kopfende (20) und ggf. einem Schaftteil (22), insbesondere eines Befestigungselementes, an ein Blechteil (12) ggf. in flüssigkeits- und/oder gasdichter Form, wobei das Funktionselement gegen das durch eine, einen Umformraum (62) aufweisende Matrize (10) abgestützte Blechteil (12) gepresst und Blechmaterial mittels wenigstens eines beweglich gelagerten Formteils (50), vorzugsweise mittels wenigstens zwei solcher Formteile (50) der Matrize (10), wobei das bzw. jedes Formteil einen jeweiligen Wandbereich (58) des Umformraums (62) bildet und durch eine radial nach innen gerichtete Bewegung des bzw. jedes Formteils das Blechmaterial in eine Hinterschneidung (24) des Funktionselementes (14) gedrückt wird,
**dadurch gekennzeichnet,**
**dass** das bzw. jedes Formteil (50) zunächst solange durch einen Mantelflächenbereich (88) eines Anschlagelements (68) radial abgestützt und hierdurch an der radial nach innen gerichteten Bewegung gehindert wird, bis das Blechmaterial durch das Kopfende (20) des Funktionselements (14) in den Umformraum (62) zur Ausbildung einer deutlichen, das Kopfende mindestens weitgehend umschließenden Vertiefung (87) gezogen ist und erst anschließend durch eine axiale Bewegung des Mantelflächenbereichs (88) des Anschlagelements (68) am Formteil bzw. an jedem Formteil (50) vorbei für die radiale Bewegung zum Drücken des Blechmaterials in die Hinterschneidung (24) freigegeben wird.

2. Verfahren nach Anspruch 1,
**dadurch gekennzeichnet,**
**dass** das bzw. jedes Formteil (50) an seinen, dem Blechmaterial zugewandten Flächen (66) am Übergang in den den Umformraum (62) bildenden Wandabschnitt (58) gerundet ist und der genannte Wandabschnitt das Blechmaterial in Formmerkmale (24) an der radial äußeren Seite des Kopfendes (20) des Funktionselementes (14) hineindrückt.

3. Verfahren nach Anspruch 1 oder 2,
**dadurch gekennzeichnet,**
**dass** das bzw. jedes Formteil (50) an seinen, dem. Blechmaterial zugewandten Flächen am Übergang in den den Umformraum bildenden Wandabschnitt einen gerundeten, radial nach innen ragenden Vorsprung (64) aufweist, der das Blechmaterial in eine am Kopfende (20) des Elements (14) oder am Übergang vom Kopfende (20) des Funktionselements (14) in den Schaftteil (22) gebildete Hinterschneidung (24) hineindrückt.

4. Verfahren nach einem der vorhergehenden Ansprüche,
**dadurch gekennzeichnet,**
**dass** das Anschlagelement durch das Kopfende (20) des Funktionselements (14) unter Zwischenschaltung des Blechmaterials (12) bei der Ausbildung der Vertiefung (87) zurückgedrängt wird, bis die Abstützung des bzw. jedes Formteils (50) am Anschlagelement (68) aufgehoben ist

5. Verfahren nach einem der vorhergehenden Ansprüche,
**dadurch gekennzeichnet,**
**dass** die Formteile (50) nach der Freigabe der radial nach innen gerichteten Bewegung unter dem Druck eines Stempels an jeweiligen zur Längsachse (30) der Matrize geneigten Führungsbahnen (44) entlang gleiten und somit gleichzeitig axial und radial bewegt werden.

6. Verfahren nach Anspruch 4 und 5,
**dadurch gekennzeichnet,**
**dass** nach der Anbringung des Funktionselements (14) an das Blechteil (12) die Formteile (50) durch das vorgespannte Anschlagelement (68) in axialer Richtung bewegt werden, wobei das aus dem Funktionselement (14) und dem Blechteil gebildete Zusammenbauteil, das auch vom Anschlagelement (68) axial bewegt wird, freigegeben wird, und die axiale Bewegung des Zusammenbauteils ggf. eine durch die geneigten Führungsbahnen (44) zugelassene, radial nach außen gerichtete Bewegung der Formteile verursacht.

7. Verfahren nach einem der vorhergehenden Ansprüche,
**dadurch gekennzeichnet,**
**dass** Blechmaterial mittels der Formteile (50) mit am Funktionselement (14) ausgebildeten, insbesondere nut- und/oder rippenartigen Verdrehsicherungsmerkmalen (24) in Eingriff gebracht wird.

8. Verfahren nach einem der vorhergehenden Ansprüche,
**dadurch gekennzeichnet,**
**dass** das Blechteil (12) zumindest im Bereich des Funktionselementes (14) bei dessen Anbringung am Blechteil nicht perforiert und nicht gelocht wird.

9. Verfahren nach einem der Ansprüche 1 bis 7,
**dadurch gekennzeichnet,**
**dass** ein vorgelochtes Blechteil verwendet wird oder dass das Blechteil bei der Anbringung des Funktionselemerites (14) mittels eines selbststanzenden Funktionselementes oder eines vorlaufenden Lochstempels gelocht wird.

10. Matrize (10), insbesondere zur Verwendung in einem Verfahren nach einem der Ansprüche 1 bis 9 zur Anbringung eines Funktionselementes mit einem Kopfende (20) und ggf. einem Schaftteil (22), insbesondere eines Befestigungselementes (14) an ein Blechteil (12) ggf. in flüssigkeits- und/oder gasdichter Form, wobei die Matrize (10) einen Matrizenkörper (40) und wenigstens ein darin beweglich gelagertes Formteil (50), vorzugsweise mindestens zwei solche Formteile sowie ein in Richtung auf das Blechteil (12) zu vorgespanntes Anschlagelement (68) für das bzw. jedes Formteil in der Mitte des Matrizenkörpers aufweist und das bzw. jedes Formteil (50) einen Wandbereich eines Umformraums (62) bildet, der in der Matrize im Bereich ihrer dem Blechteil zugewandten Stirnseite vorgesehen ist, und durch eine jeweilige schräg gestellte Führungsbahn (44) für eine radial nach innen gerichtete Bewegung geführt ist, die zu einem Eindrücken des Blechmaterials in ein Formmerkmal (24) bzw. eine Hinterschneidung des Funktionselementes führt,
**dadurch gekennzeichnet,**
**dass** jedes Formteil (50) bei der Ausbildung einer Vertiefung (87) im Blechteil, welche im Umformraum (62) der Matrize durch auf das Kopfende (20) des Funktionselements (14) ausgeübtem Druck erfolgt, an einem Mantelflächenbereich (88) des Anschlagelements (68) radial abgestützt ist und hierdurch an der radial nach innen gerichteten Bewegung solange gehindert ist, bis der Mantelflächenbereich (88) des Anschlagelements (68), an dem jedes Formteil (50) abgestützt ist, durch den erwähnten Druck vom Kopfende (20) des Funktionselements (14) gegen die Vorspannung am Formteil (50) vorbei bewegt ist und die radiale Bewegung des Formteils (50) freigegeben hat.

11. Matrize nach Anspruch 10,
**dadurch gekennzeichnet,**
**dass** nach der Bewegung des Anschlagelements (68) an den Formteilen (50) vorbei die schräg gestellten Führungsbahnen (44) aufgrund von auf das Blechteil ausgeübtem Druck zu der radial nach innen gerichteten Bewegung der Formteile (50) bei gleichzeitiger axialer Bewegung derselben führen.

12. Matrize nach Anspruch 10 oder 11,
**dadurch gekennzeichnet,**
**dass** die axiale Länge des Bereiches des Anschlagelements (68), der die Formteile (50) an der radial nach innen gerichteten Bewegung hindert, so bemessen ist, dass die durch das Kopfende des Funktionselements (14) im Umformraum (62) des Blechteils gebildete Vertiefung (87) das Kopfende (20) mindestens weitgehend umschließt, bevor die Abstützung der Formteile (50) an diesem Bereich durch Gleiten dieses Bereichs an den Formteilen vorbei aufgehoben und die radiale Bewegung der Formteile (50) freigegeben ist.

13. Matrize nach einem der Ansprüche 10 bis 12,
**dadurch gekennzeichnet,**
**dass** die Formteile (50) an ihren, dem Blechmaterial (12) zugewandten Flächen (66) beim Übergang in den den Umformraum (62) bildenden Wandabschnitten (58) gerundet sind.

14. Matrize nach einem der Ansprüche 10 bis 13,
**dadurch gekennzeichnet,**
**dass** die Formteile (50) an ihren, dem Blechmaterial (12) zugewandten Flächen (66) beim Übergang in den den Umformraum (62) bildenden Wandabschnitten (58) gerundete, radial nach innen ragende Vorsprünge (64) aufweisen, die das Blechmaterial in eine am Kopfende (20) oder am Übergang vom Kopfende (20) des Funktionselements (14) in den Schaftteil (22) gebildete Hinterschneidung (24) hineindrücken.

15. Matrize nach einem der vorhergehenden Ansprüche 10 bis 14,
**dadurch gekennzeichnet,**
**dass** für jedes Formteil (50) eine zur Längsachse (30) der Matrize geneigte T-nutartige Führungsbahn (44) vorgesehen ist, in die es nach der Freigabe der radial nach innen gerichteten Bewegung unter dem Druck eines Stempels (16) gleitet und somit gleichzeitig axial und radial bewegt ist.

16. Matrize nach einem der vorhergehenden Ansprüche 10 bis 15,
**dadurch gekennzeichnet,**
**dass** der Umformraum (62) auch durch fest angeordnete Wandbereiche (60) des Matrizenkörpers (40) gebildet ist, die je zwischen zwei beweglichen Formteilen (50) der Matrize angeordnet sind.

17. Matrize nach Anspruch 16;
**dadurch gekennzeichnet,**
**dass** die fest angeordneten Wandbereiche (60) des Matrizenkörpers im Ausgangszustand vor Erzeugung der Vertiefung (87) im Blechteil gegenüber den Wandbereichen (58) der Formteile (50), die den Umformraum (62) mit definieren, fluchten oder geringfügig vor oder zurückversetzt sind, während sie im geschlossenen Zustand der Matrize nach der Fertigstellung der Verbindung zwischen dem Funktionselement und dem Blechteil deutlich gegenüber den radial nach innen vorgeschobenen Wandbereichen (58) der Formteile (50), die den Umformraum (62) mit definieren, zurückversetzt sind.

18. Matrize nach einem der Ansprüche 10 bis 17,
**dadurch gekennzeichnet,**
**dass** zur Vorspannung des Anschlagelements (68) in axialer Richtung auf das Blechteil (12) zu, eine in einem Hohlraum der Matrize angeordnete Feder (72) vorgesehen ist.

19. Matrize nach Anspruch 18,
**dadurch gekennzeichnet,**
**dass** das Anschlagelement (68) an seinem der Feder (72) zugewandten Ende eine radiale Schulter (70) aufweist, die zu Anlage an einer Schulter (74) der Matrize kommt und hierdurch die maximale Bewegung des Anschlagelements (68) auf das Blechteil (12) zu begrenzt.

20. Matrize nach Anspruch 19,
**dadurch gekennzeichnet,**
**dass** die Feder (72) an ihrem dem Anschlagelement (68) abgewandten Ende an einem in der Matrize festgelegten Widerlager (82) abgestützt ist.

21. Matrize nach Anspruch 20,
**dadurch gekennzeichnet,**
**dass** die Feder (72) zwischen der Schulter (70) des Anschlagelements (68) und einer Schulter des Widerlagers (82) vorgespannt ist.

22. Matrize nach Anspruch 20 oder 21,
**dadurch gekennzeichnet,**
**dass** das Widerlager (82) in einer Längsbohrung der Matrize mittels eines Federringes (84) gehalten ist.

23. Matrize nach einem der Ansprüche 10 bis 22,
**dadurch gekennzeichnet,**
**dass** das Anschlagelement (68) einen vorderen Stiftteil (76) aufweist, dessen freie Stirnseite (78) vom Kopfende (20) des Funktionselements (14) ggf. unter Zwischenschaltung des Blechmaterials für die axiale Bewegung des Anschlagelements (68) beaufschlagbar ist.

24. Matrize nach einem der Ansprüche 10 bis 23,
**dadurch gekennzeichnet,**
**dass** die dem Blechteil (12) zugewandten Stirnseiten der Formteile (50) bis zum Abschluss der radial nach innen gericliteten Bewegung der Formteile (50) über die Stirnseite (46) des Matrizenkörpers (40) stehen.

25. Matrize nach Anspruch 24,
**dadurch gekennzeichnet,**
**dass** beim Abschluss der radial nach innen gerichteten Bewegung der Formteile (50) diese bündig mit der Stirnseite (46) des Matrizenkörpers (40) stehen.

## Claims

1. A method for the attachment of a functional element (14) having a head end (20) and optionally a shaft part (22), in particular a fastener element, to a sheet metal part (12), optionally in liquid-tight and/or gas-tight form, wherein the functional element is pressed against the sheet metal part (12) supported by a die button having a shaping space (62) and sheet metal material is pressed by means of at least one movably mounted shaped part (50), and preferably by means of at least two such shaped parts (50) of the die button, and by a radially inwardly directed movement of the or each shaped part, into an undercut of the functional element (14), with the or each shaped part forming a respective wall region of the shaping space (62),
**characterized in that**
the or each shaped part (50) is initially radially supported by a jacket surface region (88) of an abutment element (68) and is prevented from a radially inwardly directed movement so long until the sheet metal material is drawn by the head end (20) of the functional element (14) into the shaping space (62) for the formation of a pronounced recess (87) at least largely surrounding the head end and is only then released by an axial movement of the jacket surface region (88) of the abutment element past the or each shaped part for the radial movement for the pressing of the sheet metal material into the undercut.

2. A method in accordance with claim 1,
**characterized in that**
the or each shaped part (50) is rounded at its surfaces (66) facing the sheet metal material at the transition into the wall section (58) forming the shaping space (62) and **in that** the said wall section presses the sheet metal material into features of shape (24) at the radially outer side of the head end of the functional element.

3. A method in accordance with claim 1 or claim 2,
**characterized in that**
the or each shaped part (50) has at its surfaces confronting the sheet metal material, at the transition into the wall section forming the shaping space, a rounded radially inwardly directed projection (64) which presses the sheet metal material into an undercut (24) formed at the head end (20) of the element (14), or at the transition from the head end (20) of the functional element (14) into the shaft part (22).

4. A method in accordance with any one of the preceding claims,
**characterized in that**
the abutment element is urged backwardly by the head end (20) of the functional element (14) through the intermediary of the sheet metal material (12) during the formation of the recess (87) until the support of the or each shaped part (50) at the abutment element (68) is removed.

5. A method in accordance with any one of the preceding claims,
**characterized in that**,
after the freeing of the radially inwardly directed movement, the shaped parts (50)slide under the pressure of the plunger on respective guide tracks (44) inclined to the longitudinal axis (30) of the die button and are thus simultaneously moved axially and radially.

6. A method in accordance with claim 4 and claim 5,
**characterized in that**
after the attachment of the functional element (14) to the sheet metal part (12), the shaped parts (50) are moved in the axial direction by the biased abutment element (68), with the component assembly formed by the functional element (14) and the sheet metal part, which is also axially moved by the abutment element (68) being released and the axial movement of the component assembly optionally causing a radially outwardly directed movement of the shaped parts permitted by the inclined guide tracks (44).

7. A method in accordance with any one of the preceding claims,
**characterized in that**
sheet metal material is brought by means of the shaped parts (50) into engagement with features (24) providing security against rotation, in particular groove-like and/or rib-like features formed on the functional element (14).

8. A method in accordance with any one of the preceding claims,
**characterized in that**
the sheet metal part (12) is not perforated and not pierced, at least in the region of the functional element (14) during its attachment to the sheet metal part.

9. A method in accordance with one of the claims 1 to 7,
**characterized in that**
a pre-holed sheet metal part is used and/or **in that** the sheet metal part is pierced during the attachment of the functional element (14) by means of a self-piercing functional element or a preceding hole punch.

10. A die button (10), in particular for use in the method in accordance with one of the claims 1 to 9 for the attachment of a functional element having a head end (20) and optionally a shaft part (22), in particular a fastener element (14), to a sheet metal part (12), optionally in liquid-tight and/or gas-tight form, wherein the die button (10) has a die button body (40) with at least one shaped part (50) movably mounted therein, preferably at least two such shaped parts and also an abutment element (68) biased in the direction towards the sheet metal part (12) for the or each shaped part at the centre of the die button body and wherein the or each shaped part (50) forms a wall region of a shaping space (62) which is provided in the die button in the region of its end face confronting the sheet metal part and is guided by a respective obliquely positioned guide track (44) for a radially inwardly directed movement, which leads to the sheet metal material being pressed into a feature of shape (24), i.e. into an undercut of the functional element,
**characterized in that**
each shaped part (50) is radially supported on a jacket surface region (88) of the abutment element (68) during the formation of a recess (87) in the sheet metal part which takes place in the shaping space (62) of the die button by pressure exerted onto the head end (20) of the functional element (14) and is hereby prevented from the radially inwardly directed movement so long until the jacket surface region (88) of the abutment element (68) against which each shaped part (50) is supported is moved by the said pressure from the head end (20) of the functional element (14) against the bias past the shaped part (50) and has released the radial movement of the shaped part (50).

11. A die button in accordance with claim 10,
**characterized in that**,
after the movement of the abutment element (68) past the shaped part (50), the obliquely disposed guide tracks (44) lead, as a result of the pressure on the sheet metal part, to the radially inwardly directed movement of the shaped parts (50) with simultaneous axial movement of the same.

12. A die button in accordance with claim 10 or 11,
**characterized in that**
the axial length of the region of the abutment element (68) which prevents the shaped parts (50) from the radially inwardly directed movement is so dimensioned that the recess (87) formed by the head end of a functional element (14) in the shaping space (62) of the sheet metal part at least largely surrounds the head end (20) before the support of the shaped parts (50) at this region is removed by sliding of this region past the shaped parts and the radial movement of the shaped parts (50) is freed.

13. A die button in accordance with any one of the claims 10 to 12,
**characterized in that**
the shaped parts (50) are rounded at their surfaces (66) confronting the sheet metal material (12) at the transition into the wall sections (58) forming the shaping space (62).

14. A die button in accordance with any one of the claims 10 to 13,
**characterized in that**
the shaped parts (50) have, at their surfaces (66) confronting the sheet metal material (12) at the transition into the wall sections (58) forming the shaping space (62), radially inwardly directed projections (64) which press the sheet metal material into an undercut (24) formed at the head end (20), or at the transition of the head end (20) of the functional element (14) into the shaft part (22).

15. A die button in accordance with any one of the preceding claims 10 to 14,
**characterized in that**
for each shaped part (50) there is provided a guide track (44) resembling a T-groove inclined towards the longitudinal axis (30) of the die button in which it slides after freeing of the radially inwardly directed movement under the pressure of a plunger (16) and is thus simultaneously axially and radially moved.

16. A die button in accordance with any one of the preceding claims 10 to 15,
**characterized in that**
the shaping space (62) is also formed by fixedly arranged wall regions (60) of the die button body (40) which are each arranged between two movable shaped parts (50) of the die button.

17. A die button in accordance with claim 16,
**characterized in that**,
in the starting state, prior to generation of the recess (87) in the sheet metal part, the fixedly arranged wall regions (60) of the die button body are aligned with or offset fractionally in front of or behind the wall regions (58) of the shaped parts (50) which co-define the shaping space (62), whereas, in the closed state of the die button, after the completion of the connection between the functional element and the sheet metal part, they are significantly set back relative to the radially inwardly advanced wall regions (58) of the shaped parts (50) which co-define the shaping space (62).

18. A die button in accordance with any one of the claims 10 to 17,
**characterized in that**
a spring (72) disposed in a hollow cavity of the die button is provided for the biasing of the abutment element (68) in the axial direction towards the sheet metal part (12).

19. A die button in accordance with claim 18,
**characterized in that**
the abutment element (68) has, at its end confronting the spring (72), a radial shoulder (70) which comes into contact with a shoulder (74) of the die button and hereby limits the maximum movement of the abutment element (68) towards the sheet metal part (12).

20. A die button in accordance with claim 19,
**characterized in that**
the spring (72) is supported at its end remote from the abutment element (68) on an abutment (82) fixed in the die button.

21. A die button in accordance with claim 20,
**characterized in that**
the spring (72) is pre-stressed between the shoulder (70) of the abutment element (68) and a shoulder of the abutment (82).

22. A die button in accordance with claim 20 or claim 21,
**characterized in that**
the abutment (82) is held in a longitudinal bore of the die button by means of a spring ring (84).

23. A die button in accordance with any one of the claims 10 to 22,
**characterized in that**
the abutment element (68) has a front pin part (76) the free end face (78) of which can be loaded by the head end (20) of the functional element (14), optionally through the intermediary of the sheet metal part, for the axial movement of the abutment element (68).

24. A die button in accordance with any one of the claims 10 to 23,
**characterized in that**
the end faces of the shaped parts (50) confronting the sheet metal part (12) project, up to the conclusion of the radially inwardly directed movement of the shaped parts (50), beyond the end face (46) of the die button (40).

25. A die button in accordance with claim 24,
**characterized in that**
at the conclusion of the radial inwardly directed movement of the shaped parts (50) these are flush with the end face (46) of the die button body.

## Revendications

1. Procédé pour appliquer un élément fonctionnel (14) comprenant une extrémité de tête (20) et le cas échéant une partie en fût (22), en particulier un élément de fixation, sur une pièce en tôle (12), le cas échéant sous forme étanche aux liquides et/ou étanche aux gaz, dans lequel l'élément fonctionnel est pressé contre la pièce en tôle (12) soutenue par une matrice (10) présentant une cavité de mise en forme (62), et le matériau de la tôle est pressé, à l'aide d'au moins une partie de formage (50) montée mobile, de préférence à l'aide d'au moins deux parties de formage (50) de la matrice (10), de sorte que la partie de formage ou chaque partie de formage forme une zone de paroi respective (58) de la cavité de mise en forme (62), par un mouvement dirigé radialement vers l'intérieur de la partie de formage ou de chaque partie de formage, en pénétration dans une contre-dépouille (24) de l'élément fonctionnel (14),
**caractérisé en ce que**
la partie de formage ou chaque partie de formage (50) est tout d'abord soutenue radialement par une zone de surface enveloppe (88) d'un élément de butée (68), et empêchée de ce fait d'effectuer un mouvement dirigé radialement vers l'intérieur, aussi longtemps que le matériau en tôle est tiré par l'extrémité de tête (20) de l'élément fonctionnel (14) dans la cavité de mise en forme (62) pour réaliser un renfoncement marqué (87) qui entoure au moins largement l'extrémité de tête, et est libérée uniquement ensuite par un mouvement axial de la zone de surface enveloppe (88) de l'élément de butée (68) en passant devant la partie de formage ou chaque partie de formage (50) pour le déplacement radial destiné à presser le matériau en tôle dans la contre-dépouille (24).

2. Procédé selon la revendication 1,
**caractérisé en ce que**
la partie de formage ou chaque partie de formage (50) est arrondie, au niveau de ses surfaces (66) tournée vers le matériau en tôle, à la transition vers le tronçon de paroi (58) qui forme la cavité de mise en forme (62), et **en ce que** ledit tronçon de paroi enfonce le matériau en tôle dans des reliefs de mise en forme (24) au niveau du côté radialement extérieur de l'extrémité de tête 1620) de l'élément fonctionnel (14).

3. Procédé selon la revendication 1 ou 2,
**caractérisé en ce que**
la partie de formage ou chaque partie de formage (50) comporte, au niveau de ses surfaces tournées vers le matériau en tôle, à la transition vers le tronçon de paroi qui forme la cavité de mise en forme, une saillie arrondie (64) dépassant radialement vers l'intérieur, qui enfonce le matériau en tôle dans une contre-dépouille (24) formée à l'extrémité de tête (20) de l'élément (14) ou à la transition de l'extrémité de tête (20) de l'élément fonctionnel (14) vers la partie en fût (22).

4. Procédé selon l'une des revendications précédentes,
**caractérisé en ce que**
l'élément de butée est repoussé par l'extrémité de tête (20) de l'élément fonctionnel (14) avec interposition du matériau en tôle (12) lors de la réalisation du renfoncement (87), jusqu'à qu'annuler le soutien à de la partie de formage ou de chaque partie de formage (50) sur l'élément de butée (68).

5. Procédé selon l'une des revendications précédentes,
**caractérisé en ce que**
les parties de formage (50), après libération du mouvement dirigé radialement vers l'intérieur sous la pression d'un poinçon, coulisse le long de voies de guidage (44) respectives inclinées par rapport à l'axe longitudinal (30) de la matrice, et sont par conséquent déplacées simultanément axialement et radialement.

6. Procédé selon les revendications 4 et 5,
**caractérisé en ce que**
après application de l'élément fonctionnel (14) sur la pièce en tôle (12), les parties de formage (50) sont déplacées en direction axiale par l'élément de butée (68) précontraint, le composant assemblé formé par l'élément fonctionnel (14) et par la pièce en tôle, qui est également déplacé axialement par l'élément de butée (68), est libéré, et le mouvement axial du composant assemblé provoque un mouvement, des parties de formage, permis par les voies de guidage inclinées (44) et dirigé radialement vers l'extérieur.

7. Procédé selon l'une des revendications précédentes,
**caractérisé en ce que**
le matériau en tôle est amené, au moyen des parties de formage, en engagement avec des reliefs antirotation (24) réalisés sur l'élément fonctionnel (14), en particulier analogue à des rainures et/ou à des nervures.

8. Procédé selon l'une des revendications précédentes,
**caractérisé en ce que**
la pièce en tôle (12) n'est pas perforée ni trouée, au moins dans la zone de l'élément fonctionnel (14) lors de son application sur la pièce en tôle.

9. Procédé selon l'une des revendications 1 à 7,
**caractérisé en ce que**
on utilise une pièce en tôle préalablement trouée, ou **en ce que**, lors de l'application de l'élément fonctionnel (14), la pièce en tôle est trouée au moyen d'un élément fonctionnel à auto-estampage, ou d'un poinçon de perçage placé en avant.

10. Matrice (10), en particulier pour l'utilisation dans un procédé selon l'une des revendications 1 à 9, pour appliquer un élément fonctionnel avec une extrémité de tête (20) et le cas échéant une partie en fût (22), en particulier un élément de fixation (14), sur une pièce en tôle (12), le cas échéant sous forme étanche vis-à-vis des liquides et/ou des gaz, ladite matrice (10) comprenant un corps de matrice (40) et au moins une partie de formage (50) montée de façon mobile à l'intérieur de ce corps, de préférence au moins deux parties de formage, ainsi qu'un élément de butée (68) précontraint en direction de la pièce en tôle (12) pour la partie de formage ou chaque partie de formage au milieu du corps de matrice, et la partie de formage ou chaque partie de formage (50) forme une partie de paroi d'une cavité de mise en forme (62), laquelle est prévue dans la matrice dans la zone de sa face frontale tournée vers la pièce en tôle, et est guidée par une voie de guidage respective 44, dressée en oblique, pour un mouvement dirigé radialement vers l'intérieur et qui provoque un enfoncement du matériau en tôle dans un relief de mise en forme (24) ou respectivement dans une contre-dépouille de l'élément fonctionnel,
**caractérisée en ce que**
chaque partie de formage (50), lors de la réalisation d'un renfoncement (87) dans la pièce en tôle, laquelle exerce dans la cavité de mise en forme (62) de la matrice une pression exercée par l'extrémité de tête (20) de l'élément fonctionnel (14), est soutenue radialement contre une région de surface enveloppe (88) de l'élément de butée (68) et est de ce fait empêchée d'exécuter un mouvement dirigé radialement vers l'intérieur, aussi longtemps que la zone de surface enveloppe (88) de l'élément de butée (68), sur laquelle chaque partie de formage (50) est soutenue, est déplacée du fait de la pression évoquée par l'extrémité de tête (20) de l'élément fonctionnel (14) à l'encontre de la précontrainte, en passant devant la partie de formage (50), et a libéré le mouvement radial de la partie de formage (50).

11. Matrice selon la revendication 10,
**caractérisée en ce que**
après le mouvement de l'élément de butée (68) en passant devant les parties de formage (50), les voies de guidage dressées en oblique (44) exécutent, en raison de la pression exercée sur la pièce en tôle, en supplément au mouvement des parties de formage (50) dirigé radialement vers l'intérieur, un mouvement axial simultané de celles-ci.

12. Matrice selon la revendication 10 ou 11,
**caractérisée en ce que**
la longueur axiale de la région de l'élément de butée (68) qui empêche aux parties de formage (50) d'exécuter un mouvement dirigé radialement vers l'intérieur, est dimensionnée de telle façon que le renfoncement (87) formé par l'extrémité de tête de l'élément fonctionnel (14) dans la cavité de mise en forme (62) de la pièce en tôle, enferme au moins largement l'extrémité de tête (20) avant que le soutien des pièces de formage (50) soit annulé dans cette zone par coulissement de cette zone en passant devant les parties de formage, et le mouvement radial des parties de formage (50) est libéré.

13. Matrice selon l'une des revendications 10 à 12,
**caractérisé en ce que** les parties de formage (50) sont arrondies au niveau de leurs surfaces (66) tournées vers le matériau en tôle (12) à la transition vers les tronçons de paroi (58) qui forment la cavité de mise en forme (62).

14. Matrice selon l'une des revendications 10 à 13,
**caractérisée en ce que**
les parties de formage (50) comportent, au niveau de leurs surfaces (66) tournées vers le matériau en tôle (12), à la transition vers les tronçons de paroi (58) formant la cavité de mise en forme (62), des saillies arrondies (64) dépassant radialement vers l'intérieur, qui enfoncent le matériau en tôle dans une contre-dépouille 24 formée dans la partie en fût (22) à l'extrémité de tête (20) ou à la transition de l'extrémité de tête (20) de l'élément fonctionnel (14) vers la partie en fût (22).

15. Matrice selon l'une des revendications 10 à 14,
**caractérisée en ce que**
pour chaque partie de formage (50) il est prévu une voie de guidage (44) analogue à une rainure en forme de T, inclinée par rapport à l'axe longitudinal (30) de la matrice, dans laquelle la partie de formage coulisse après libération du mouvement dirigé radialement vers l'intérieur sous la pression d'un poinçon (16), et est déplacée ainsi simultanément axialement et radialement.

16. Matrice selon l'une des revendications 10 à 15,
**caractérisée en ce que** la cavité de mise en forme (62) est également formée par des régions de paroi (60) agencées de façon fixe, du corps de matrice (40), qui sont chacune agencée entre deux parties de formage mobiles (50) de la matrice.

17. Matrice selon la revendication 16,
**caractérisée en ce que**
les régions de paroi (60) agencées de façon fixe, du corps de matrice, dans l'état de départ avant la production du renfoncement (87) dans la pièce en tôle, sont en alignement, ou légèrement décalées vers l'avant ou vers l'arrière par rapport aux régions de paroi (58) des parties de formage (50) qui définissent la cavité de mise en forme (62), alors que, dans l'état fermé de la matrice après un établissement de la liaison entre l'élément fonctionnel et la pièce en tôle, elles sont nettement décalées vers l'arrière par rapport aux régions de paroi (58), déplacées radialement vers l'intérieur, des parties de formage (50) qui définissent la cavité de mise en forme (62).

18. Matrice selon l'une des revendications 10 à 17,
**caractérisée en ce que**
pour la précontrainte de l'élément de butée (68) en direction axiale vers la pièce en tôle (12), il est prévu un ressort (72) agencé dans une cavité de la matrice.

19. Matrice selon la revendication 18,
**caractérisée en ce que**
l'élément de butée (68) comprend, à son extrémité tournée vers le ressort (72), un épaulement radial (70) qui vient en appui contre un épaulement (74) de la matrice, et délimite ainsi le déplacement maximum de l'élément de butée (68) vers la pièce en tôle (12).

20. Matrice selon la revendication 19,
**caractérisée en ce que**
le ressort est soutenu, à son extrémité détournée de l'élément de butée (68), contre une contre-butée (82) immobilisée dans la matrice.

21. Matrice selon la revendication 20,
**caractérisée en ce que**
le ressort (72) est précontraint entre l'épaulement (70) de l'élément de butée (68) et un épaulement de la contre-butée (82).

22. Matrice selon la revendication 20 ou 21,
**caractérisée en ce que**
la contre-butée (82) est maintenue dans un perçage allongé de la matrice au moyen d'un anneau-ressort (84).

23. Matrice selon l'une des revendications 10 à 22,
**caractérisée en ce que** l'élément de butée (68) comprend une partie en tige antérieure (76), dont le côté frontal libre (78) peut être attaqué par l'extrémité de tête (20) de l'élément fonctionnel (14), le cas échéant avec interposition du matériau en tôle, pour le mouvement axial de l'élément de butée (68).

24. Matrice selon l'une des revendications 10 à 23,
**caractérisée en ce que**
les côtés frontaux, tournés vers la pièce en tôle (12), des parties de formage (50) sont dressés au-dessus du côté frontal (46) du corps de matrice (40), jusqu'à la fin du mouvement dirigé radialement vers l'intérieur, des parties de formage (50).

25. Matrice selon la revendication 24,
**caractérisée en ce que**
à la fin du mouvement dirigé radialement vers l'intérieur, des parties de formage (50), celles-ci sont en affleurement avec le côté frontal (46) du corps de matrice (40).
